# EUROPÄISCHE PATENTSCHRIFT

(11) **EP 0 491 171 B1**
(45) Veröffentlichungstag und Bekanntmachung des Hinweises auf die Patenterteilung: **24.02.1999**
(21) Anmeldenummer: 91119605.3
(22) Anmeldetag: 16.11.1991
(51) Int. Cl.: C08L 67/04, C08K 13/00, C08G 63/06, C08G 63/91, C08K 5/00, C08K 3/38

(54) **Verwendung einer Mischung aus vorwiegend einem Polyhydroxyalkanoat, Borsäure und gegebenenfalls einer Verbindung, die mindestens zwei reaktive Gruppen wie Säure- und/oder Alkoholgruppen enthält zur Herstellung eines Polymerisats und das hergestellte Polymerisat**
Use of a mixture of mainly a polyhydroxyalkanoate, boric acid and optionally a compound containing at least two reactive groups such as acid and/or alcoholic groups to prepare a polymerisate and the polymerisate produced thereby
Utilisation d'un mélange comprenant en majorité un polyhydroxyalkanoate, acide borique et facultatif un composé ayant au moins deux groupes réactifs commes des groupes acides et/ou alcooliques pour préparation d'un polymérisat et le polymérisat produit

(30) Priorität: 19.12.1990 AT 2583/90
(43) Veröffentlichungstag der Anmeldung: 24.06.1992
(73) Patentinhaber: PCD-Polymere Gesellschaft m.b.H., A-2323 Schwechat-Mannswörth (AT)
(72) Erfinder: Kleinke, Andreas, Dipl.-Chem., W-1000 Berlin 13 (DE); Reichert, Harl-Heinz, Dr., W-1000 Berlin 19 (DE); Bradel, Roman, Dipl.-Chem., W-1000 Berlin 47 (DE)
(74) Vertreter: VOSSIUS & PARTNER

(56) Entgegenhaltungen:
- EP-A- 0 400 855
- DE-A- 2 421 695
- DE-A- 4 102 170
- PATENT ABSTRACTS OF JAPAN, Band 14, Nr. 539 (C-782)(4482), 28. November 1990; & JP-A-2 227 438 (CHUKO KASEI KOGYO K.K.) 10-09-1990
- PATENT ABSTRACTS OF JAPAN, Band 14, Nr. 531 (C-780)(4474), 21. November 1990; & JP-A-2 222 421 (CHUKO KASEI KOGYO K.K.) 05-09-1990
- EUROPEAN POLYMER JOURNAL, Band 24, Nr. 8, 1988, Seiten 765-773, Exeter, Devon, GB; H. YOUNES et al.: "Phase separation in poly(ethylene glycol)/poly(lactic acid) blends"
- CHEMICAL ABSTRACTS, Band 115, Nr. 20, 18. November 1991, Zusammenfassung Nr. 214712a, Columbus, Ohio, US; N. GANGRADE et al.: "Poly(hydroxybutyrate-hydroxyvalerate) microspheres containing progesterone: prepatation, morphology and release properties", & J. MICROENCAPSULATION, 1991, 8(2), 185-202

## Beschreibung

Die Erfindung betrifft somit ein Polymerisat, dadurch gekennzeichnet, daß zumindest einige Säure- und/oder Alkoholgruppen eines Polyhydroxyalkanoates über Esterbindungen mit Borsäure und gegebenenfalls mit Alkohol- und/oder Säuregruppen einer oder mehrerer Verbindungen, die mindestens zwei reaktive Gruppen wie Säure- und/oder Alkoholgruppen enthalten, verbunden sind, wobei der Polyhydroxyalkanoatanteil im Polymerisat mindestens 70 Gew.% beträgt.

Polyhydroxyalkanoate werden als Speicherstoffe für Energie und Kohlenstoff von vielen Mikroorganismen zellintern aufgebaut und besitzen den großen Vorteil, daß sie biologisch abbaubar sind. Polyhydroxyalkanoate sind thermoplastische Polyester, die zu geformten Artikeln verarbeitbar sind. Ihre Verarbeitung bereitet allerdings Schwierigkeiten, da sie erstens schlechte mechanische Eigenschaften aufweisen und zweitens beim Schmelzen unter Verfärbung stark abgebaut werden, wobei die Schmelze einen hohen Viskositätsabfall erleidet und dann schwer verarbeitbar wird.

Zur Verbesserung der mechanischen Eigenschaften wurde in US 3,182,036 vorgeschlagen, einer Polyhydroxybuttersäure bestimmte Weichmacher, nämlich bestimmte Ester, Polyester, Polyether, chlorierte Polyphenole oder Cyanoverbindungen zuzusetzen, wobei Mischungen entstehen, die 25 bis 54 Gew.% Weichmacher enthalten. Wenn solche Mischungen aufgeschmolzen werden, ist aber die Viskosität der Schmelze so gering, daß sie nur sehr schlecht oder gar nicht mehr verarbeitbar ist. Außerdem kristallisieren solche Mischungen sehr langsam, sodaß die Zykluszeiten, beispielsweise beim Schmelzguß, sehr lang werden. Eine Verbesserung der mechanischen Eigenschaften von Polyhydroxyalkanoaten tritt gemäß EP-A-0 052 460 ein, wenn Homo- oder Copolymere der D(-)-3-Hydroxybuttersäure mit einem organischen Polymer, das mindestens 25 Gew.% Chlor- oder Nitrilgruppen enthält, vermischt werden.

Zur Erhöhung der Schmelzstabilität wird in EP-A-0 052 946 vorgeschlagen, dem Polyhydroxyalkanoat eine Verbindung mit mindestens 2 Kohlenstoff-Kohlenstoff Doppelbindungen und einen Radikalstarter zuzugeben.

Es wurde nun unerwarteterweise gefunden, daß Mischungen von Polyhydroxyalkanoat mit Borsäure und gegebenenfalls mit Verbindungen, die Säure- und/oder Alkoholgruppen enthalten, eine ausgezeichnete Schmelzstabilität aufweisen, wobei sich die Viskosität der Schmelze gegenüber reinen Polyhydroxyalkanoatschmelzen erhöht und wobei gleichzeitig die mechanischen Eigenschaften des Polymerisats, das nach dem Schmelzen der Mischungen entsteht, besser sind, als die des reinen Polyhydroxyalkanoats.

Gegenstand der Erfindung ist daher ein Polymerisat, dadurch gekennzeichnet, daß zumindest einige Säure- und/oder Alkoholgruppen eines Polyhydroxyalkanoates über Esterbindungen mit Borsäure und gegebenenfalls mit Alkohol- und/oder Säuregruppen einer oder mehrerer Verbindungen, die mindestens zwei reaktive Gruppen wie Säure- und/oder Alkoholgruppen enthalten, verbunden sind, wobei der Polyhydroxyalkanoatanteil im Polymerisat mindestens 70 Gew.% beträgt.

Bevorzugte Ausgestaltungen des beanspruchten Polymerisats sind in den Ansprüchen 2 bis 5 wiedergegeben. Ferner betrifft die vorliegende Erfindung noch ein Verfahren gemäß Anspruch zur Herstellung des Polymerisates nach einem der Ansprüche 1 bis 5 und die Verwendung von Mischungen, gemäß Anspruch 7.

Unter Polyhydroxyalkanoat sind insbesonders Poly-D(-)-3-hydroxybuttersäure, weiters deren Copolyester mit 3-Hydroxyvaleriansäure und anderen Hydroxysäuren, sowie Homo- oder Copolyester anderer Hydroxysäuren und Mischungen solcher Polyester zu verstehen.

Die Herstellung von Polyhydroxyalkanoat mit Hilfe von Mikroorganismen ist beispielsweise in EP-A- 0 144 017 oder EP-A-0 069 497 beschrieben.

Die Polyhydroxyalkanoate liegen erfindungsgemäß in Mischung mit Borsäure und gegebenenfalls mit einer Verbindung oder mit einer Mischung von Verbindungen, die mindestens zwei reaktive Gruppen wie Säure- und/oder Alkoholgruppen enthalten, vor. Die erfindungsgemäß verwendete Mischung enthält dabei mindestens 70 Gew.% Polyhydroxyalkanoat.

Unter Verbindungen, die reaktive Säuregruppen enthalten, sind anorganische, mehrbasige Säuren oder organische Säuren, wie Alkan-, Aryl- oder Alkylarylcarbonsäuren mit mindestens zwei, bevorzugt mit zwei Säuregruppen und mindestens 5, bevorzugt mit 8 bis 20, besonders bevorzugt mit 8 bis 16 C-Atomen, oder entsprechende Hydroxycarbonsäuren mit zwei oder mehr Hydroxy- oder Säuregruppen, sowie Polymere, die eine große Anzahl von freien Säuregruppen, speziell in regelmäßiger Anordnung besitzen, zu verstehen. Beispiele solcher Säuren sind etwa Glutarsäure, Adipinsäure, Sebacinsäure, Decyldicarbonsäure, Phthalsäure, Isophthalsäure, Terephthalsäure, Trimellithsäure, Hemimellithsäure, Trimesinsäure, Phenylendiessigsäure, 3-Hydroxydecansäure, ll-Hydroxyundecansäure, Polyacrylsäure, Polymethacrylsäure. Besonders bevorzugt ist Decyldicarbonsäure.

Unter Verbindungen, die reaktive Alkoholgruppen enthalten, sind Diole oder Polyole oder Polyether mit endständigen freien Hydroxygruppen zu verstehen. Diole sind solche mit mindestens 5, bevorzugt mit 8 bis 20, besonders bevorzugt mit 8 bis 16 C-Atomen. Beispiele von Diolen sind die den oben angeführten Dicarbonsäuren entsprechenden Diole, wobei Diole mit mindestens 8 C-Atomen, speziell Decandiol bevorzugt sind. Unter Polyolen sind Verbindungen mit mindestens 5 C-Atomen und mehr als 2 Hydroxygruppen, etwa Hexantriole, Decantriole oder polymere Alkohole, wie Polyvinylalkohol oder modifizierte Polyvinylalkohole, insbesonders Mowiole der Fa. Hoechst, speziell Mowiol M1 04.86, Fa. Hoechst, unter Polyether solche mit endständigen freien Hydroxygruppen, etwa Polyethylenoxid, Polypropylenoxid, Polyethylenglycol, Polymethylenglycol, bevorzugt Polyethylenglycol zu verstehen.

Bevorzugt werden Mischungen verwendet, die mindestens 70 Gew.% Polyhydroxyalkanoat und Borsäure, und gegebenenfalls eine Carbonsäure mit mindestens 5 C-Atomen und mindestens zwei Säuregruppen, eine Hydroxycarbonsäure mit mindestens 5 C-Atomen, ein Diol mit mindestens 5 C-Atomen oder ein Polyol, einen Polyether oder eine Mischung solcher Verbindungen enthalten.

Besonders bevorzugt werden Mischungen verwendet, die mindestens 70 Gew.% Polyhydroxyalkanoat und Borsäure, und gegebenenfalls eine Dicarbonsäure mit 8 bis 16 C-Atomen, ein Diol mit 8 bis 16 C-Atomen, einen Polyether oder Mischungen solcher Verbindungen enthalten.

Ganz besonders bevorzugt werden Mischungen verwendet, in denen das Polyhydroxyalkanoat ein Homo- oder Copolymer der Poly-D(-)-3-hydroxybuttersäure ist.

Die zugesetzten Verbindungen müssen bei der Schmelztemperatur des Polyhydroxyalkanoates entweder schmelzen oder sich erweichen und/ oder sich in der Polkyhydroxyalkanoatschmelze lösen und/ oder mit ihr mischbar sein. Ein Polyvinylalkohol, der sich bei der Schmelztemperatur des Polyhydroxyalkanoats noch nicht erweicht, kann durch Zusetzen von Weichmachern wie üblich weichgestellt werden. Als Weichmacher können etwa mehrwertige Alkohole, beispielsweise Glycerin, Trimethylpropan, Neopentylglykol oder andere mehrwertige Alkohole eingesetzt werden. Ein auf diese Weise weichgestellter Polyvinylalkohol ist in der Schmelze mit Polyhydroxyalkanoat mischbar.

Die erfindungsgemäß verwendete Mischung kann ferner Weichmacher und/oder Nucleierungsmittel und/oder andere in der Polymerchemie übliche Zusätze enthalten.

Als Weichmacher werden in der Polymerchemie übliche Weichmacher, bevorzugt p-Toluolsulfonsäureamid und Glycerintriacetat eingesetzt. Es hat sich überraschenderweise herausgestellt, daß der Weichmacher nach dem Aufschmelzen der Mischungen von dem entstandenen Polymerisat besonders gut aufgenommen und festgehalten wird. Dazu wurden Mischungen, bestehend aus Polyhydroxyalkanoat und einem Weichmacher und solche aus Polyhydroxyalkanoat, Borsäure und einem Weichmacher hergestellt und aufgeschmolzen. Aus den Schmelzen wurden Folien hergestellt. Die aus den erfindungsgemäß verwendeten Mischungen hergestellten Folien blieben klar und stabil, während die Folien aus Polyhydroxyalkanoat und Weichmacher allein schon nach kurzer Zeit trüb wurden, da der Weichmacher aus der Folie herausdiffundierte. Ferner hat sich gezeigt, daß die Viskosität und die Kristallisationsgeschwindigkeit einer Schmelze einer erfindungsgemäß verwendeten, weichmacherenthaltenden Mischung höher war, als jene einer Schmelze, die nur aus Polyhydroxyalkanoat und einem Weichmacher allein bestand.

Als Nucleierungsmittel werden in der Polymerchemie übliche Nucleierungsmittel, wie Bornitrid, pyrogene Kieselsäure, z.B. Aerosile, speziell Aerosil R 974 der Fa. Degussa, ganz bevorzugt Bornitrid verwendet.

Andere in der Polymerchemie übliche Zusätze, die in der erfindungsgemäß verwendeten Mischung vorliegen können, sind dem Fachmann geläufig. Solche Mittel werden üblicherweise zugesetzt, um einen bestimmten Zweck zu erfüllen. Dazu zählen beispielsweise Füllstoffe, Pigmente, Antioxidantien.

Die erfindungsgemäß verwendete Mischung enthält mindestens 70 Gew.% Polyhydroxyalkanoat Borsäure und gegebenenfalls eine Verbindung oder einer Mischung von Verbindungen, die mindestens zwei reaktive Gruppen wie Säure- und/oder Alkoholgruppen enthalten.

Vorzugsweise sind 0,1 bis 10 Gew.% einer Verbindung oder einer Mischung von Verbindungen, die mindestens zwei reaktive Gruppen wie Säure- und/oder Alkoholgruppen enthalten.

Zur Herstellung der erfindungsgemäß verwendeten Mischung werden die Ausgangsstoffe vermischt. Die Ausgangsstoffe können in fester Form durch inniges Vermahlen, Verrühren, Homogenisieren, in Lösung oder Suspension durch Verrühren oder teils fest und teils in Lösung oder Suspension durch kräftiges Verrühren und gegebenenfalls Abdampfen des Lösungsmittels oder Verdünnungsmittels vermischt werden, wobei die Mischungen mit Hilfe üblicher Granulierungsverfahren auch in Granulate übergeführt werden können.

Beim Aufschmelzen der erfindungsgemäß verwendeten Mischungen reagieren Säure- und/oder Alkoholgruppen der Polyhydroxyalkanoate, mit Borsäure und gegebenenfalls mit Alkohol- und/oder Säuregruppen der zugesetzten Verbindungen, wobei Esterbindungen entstehen. Dabei müssen nicht unbedingt alle reaktionsfähigen Gruppen reagieren, sondern es kann auch nur ein Teil der möglichen Esterbindungen ausgebildet werden. Durch die Reaktion kann es entweder zu einer Kettenverlängerung der Polyhydroxyalkanoate kommen, es kann aber auch eine Verzweigung oder Vernetzung von Polyhydroxyalkanoatketten eintreten.
Üblicherweise brechen Polymerketten des Polyhydroxyalkanoates beim Aufschmelzen auseinander, sodaß neue Säure- und Hydroxygruppen frei werden und ebenfalls, wie oben beschrieben mit den zugesetzten Verbindungen reagieren können, sodaß letztendlich ein über neue Esterbindungen verbundenes Polymerisat entsteht. Der thermische Abbau des Polyhydroxyalkanoates wird auf diese Weise kompensiert und die Mischung thermostabilisiert.
Ein solches Polymerisat ist Gegenstand der Erfindung.

Zur Herstellung des erfindungsgemäßen Polymerisats werden die beschriebenen Mischungen gegebenenfalls unter Rühren auf Temperaturen von oberhalb des Schmelzpunktes des Polyhydroxyalkanoats erhitzt, oder Polyhydroxyalkanoat wird allein erhitzt und im Verlauf des Erhitzungs- und Schmelzvorganges werden Borsäure und gegebenenfalls eine oder mehrere Verbindungen mit reaktiven Hydroxy- und/oder Säuregruppen zugegeben. Da die Reaktion exotherm verläuft und da durch stärkeres Rühren die Temperatur der Schmelze erhöht werden kann, ist darauf zu achten, daß keine Überhitzung erfolgt.
In einer besonderen Ausführungsform werden das Polyhydroxyalkanoat, Borsäure und gegebenenfalls eine oder mehrere Verbindungen mit reaktiven Hydroxy- und/oder Säuregruppen in einen heizbaren Mischer gegeben und während des Mischens erhitzt. Es hat sich herausgestellt, daß die Anwendung von Scherkräften beim Aufschmelzen den Abbau des Polyhydroxyalkanoates beschleunigt, sodaß abhängig von den Scherkräften und der Temperatur Polymerisate mit längeren oder kürzeren Polyhydroxyalkanoatketten verbunden, verzweigt oder vernetzt mit den zugesetzten säure- und/oder alkoholgruppenenthaltenden Verbindungen entstehen.

Das erfindungsgemäße Polymerisat ist beim Schmelzen thermostabil, besitzt überdies bessere mechanische Eigenschaften und kristallisiert schon bei höheren Temperaturen, als reines Polyhydroxyalkanoat.
So hat sich beim Vergleich genormter Formkörper aus erfindungsgemäßem Polymerisat und solchen aus reinem Polyhydroxyalkanoat gezeigt, daß die mechanischen Eigenschaften des erfindungsgemäßen Polymerisats gegenüber jenen eines reinen Polyhydroxyalkanoats verbessert werden. Bei Differential Scanning Calorimetry (DSC)-Messungen zeigte sich, daß das erfindungsgemäß hergestellte Polymerisat sein Kristallisationsmaximum schon bei höheren Temperaturen aufweist, als reines Polyhydroxyalkanoat.
In Vergleichsversuchen hat sich weiters gezeigt, daß die biologische Abbaubarkeit der Polyhydroxyalkanoate erhalten bleibt.

Die beschriebenen Mischungen sind lagerstabil und beim Schmelzen thermostabil, wobei beim Aufschmelzen der Mischung ein Polymerisat entsteht, dessen Viskosität höher und dessen mechanische Eigenschaften besser sind, als die des reinen Polyhydroxyalkanoats. Das erfindunsgemäße Polymerisat hält Weichmacher besser fest als reines Polyhydroxyalkanoat, wobei die Weichmacher enthaltende Schmelze eine höhere Viskosität aufweist und schneller kristallisiert, als eine Schmelze aus Polyhydroxyalkanoat und Weichmacher allein, sodaß beispielsweise beim Spritzgießen verbesserte Verarbeitungseigenschaften und kürzere Zykluszeiten erreicht werden. Die Erfindung stellt daher eine Bereicherung der Technik dar.

**Referenz Beispiel 1**

22,5 g Poly-3-D(-)-hydroxybuttersäure wurden
a) mit 1,5 g Polyethylenglycol (MG = 200.000) **(1a)**
b) mit 1,5 g Polyethylenglycol (MG = 50.000) **(1b)**
c) mit 0,99 g Mowiol M1 04.86 (modifizierter Polyvinylalkohol) der Fa. Hoechst **(1c)**
mechanisch gemischt. Die Mischungen wurden mit Hilfe eines elektrisch beheizten Mischers bei 30 UpM innig vermischt und auf 180 °C erhitzt. Nach 10 Minuten Mischzeit wurde die Heizung ausgeschaltet und das entstandene Polyhydroxyalkanoat mittels Preßluft abgekühlt, wobei es auskristallisierte. Das Polyhydroxyalkanoat wurde anschließend mit einer elektrisch beheizten Presse bei 180 °C eine Minute vorgewärmt und anschließend 3 Minuten bei 200 bar zu Platten gepreßt, die durch Kühlen mit Wasser mit einer Abkühlgeschwindigkeit von etwa 70 °C pro Minute kristallisiert wurden. Aus den Platten wurden Probekörper mit einer Einspannlänge von 29 mm, einer Gesamtlänge von 70 mm und einer Dicke von 1 mm mit Schulterkopf gestanzt.
Probekörper aus Poly-3-D(-)-hydroxybuttersäure (Poly-HB) und Probekörper aus einem Copolymer der 3-Hydroxybuttersäure (HB) und 3-Hydroxyvaleriansäure (HV), HB : HV = 95 : 5 wurden auf die gleiche Art und Weise hergestellt.
Mit den auf oben beschriebene Art und Weise hergestellten Probekörpern wurden Zugversuche mit einer Zuggeschwindigkeit von 50 mm /min zur Ermittlung der Bruchdehnung epsilon (%) und der Zugspannung sigma (N/mm²) durchgeführt.
Dabei wurden die folgenden in Tabelle 1 zusammengestellten Ergebnisse erhalten:

**Tabelle 1**

| | **Poly-HB** | **Poly-HB/HV** | **1a** | **1b** | **1c** |
|---|---|---|---|---|---|
| epsilon | 2,07 | 2,80 | 3,59 | 5,52 | 5,93 |
| sigma | 2,68 | 2,75 | 2,83 | 3,36 | 3,85 |

Die Werte zeigen die verbesserten mechanischen Eigenschaften des erfindungsgemäßen Polyhydroxyalkanoates gegenüber Poly-HB und Poly-HB/HV.

### Beispiel 1

Auf die in Referenzbeispiel 1 beschriebene Art und Weise, aber mit einer Mischzeit von 2 Minuten und einer Misch- und Preßtemperatur von 175 °C wurden Probekörper aus Poly-HB **(V)** und solche aus einer Mischung von 95,2 Gew.% Poly-HB, 0,4 Gew.% Borsäure, 0,4 Gew.% Bornitrid und 4 Gew.% p-Toluolsulfonsäureamid **(2(4%)**) und einer entsprechenden Mischung ohne Borsäure **(2a(4%)**) und entsprechenden Mischungen mit und ohne Borsäure mit 11 Gew.% **(2(11%)** und **2a(11%)**) und 20 Gew.% p-Toluolsulfonsäureamid **(2(20%)** und **2a(20%)**) hergestellt und deren Drehmoment und deren mechanischen Eigenschaften getestet. Das Drehmoment D (Nm) wurde im Mixer nach 2 Minuten Reaktionszeit gemessen und ist ein Maß für die Viskosität der Schmelze. Dabei wurden die folgenden, in Tabelle 2 zusammengestellten Ergebnisse erhalten:

**Tabelle 2**

| **Mischung** | **epsilon (%)** | **sigma (N/mm**^{**2**}**)** | **a**_{**n**} **(kJ/m**^{**2**}**)** | **D (Nm) (175°C)** | **T**_{**K**} **(°C)** |
|---|---|---|---|---|---|
| **V** | 4,55 | 3,32 | 6,77 | 4,7 | 111,4 |
| **2a (4%)** | 5,93 | 2,94 | 6,48 | 3,2 | 105,5 |
| **2 (4%)** | 9,65 | 3,78 | >39,24 | 5,8 | 109,6 |
| **2a (11%)** | 6,21 | 2,28 | 7,75 | 2,9 | 95,1 |
| **2 (11%)** | 9,93 | 2,80 | 13,44 | 4,8 | 99,8 |
| **2a (20%)** | 3,86 | 1,47 | 4,32 | 2,2 | 83,1 |
| **2 (20%)** | 10,89 | 2,40 | 11,77 | 3,8 | 87,4 |

epsilon = Bruchdehnung, sigma = Zugspannung, aₙ = Schlagzähigkeit, D = Drehmoment.

Die Werte zeigen, daß durch Zugabe von Borsäure die mechanischen Eigenschaften und die Viskosität der aufgeschmolzenen Mischung verbessert werden und daß die erfindungsgemäßen Mischungen bei höheren Temperaturen kristallisieren, als entsprechende Mischungen von Polyhydroxyalkanoat und Weichmacher.

### Beispiel 2

Auf die in Beispiel 1 beschriebene Art und Weise wurden Probekörper bestehend aus 99,2 Gew.% Poly-HB, 0,4 Gew.% Borsäure und 0,4 Gew.% Bornitrid hergestellt, deren mechanischen Eigenschaften getestet und mit denen von Poly-HB, vermischt mit 0,4 Gew% Bornitrid verglichen. Dabei wurden die folgenden, in Tabelle 3 zusammengestellten Ergebnisse erhalten:

**Tabelle 3**

| | **Poly-HB** | **3** |
|---|---|---|
| epsilon (%) | 4,55 | 8,83 |
| sigma (N/mm²) | 3,32 | 4,41 |
| aₙ (kJ/m²) | 6,77 | 13,05 |

### Beispiel 3

a) 95,6 Gew.-% Poly-HB, 4 Gew.% Mowiol M1 04.86, Fa. Hoechst, 0,4 Gew.% Bornitrid
b) 99,2 Gew.% Poly-HB, 0,4 Gew.% Borsäure, 0,4 Gew.% Bornitrid
c) 95,2 Gew.% Poly-HB, 0,4 Gew.% Borsäure, 4 Gew.% Mowiol M1 04.86, Fa. Hoechst, 0,4 Gew.% Bornitrid
d) Poly-HB und 0,4 Gew% Bornitrid
wurden trocken vermischt und homogenisiert. Diese Mischungen wurden über Differential Scanning Calorimetry (DSC)-Messungen unter Stickstoff charakterisiert. Dazu wurden jeweils 4 bis 6 mg eingewogen und eine Heiz- und Kühlrate von 10 °C/min eingestellt. Jede Mischung wurde bei verschiedenen Haltetemperaturen (185, 190, 195, 200, 205, 210 °C) je vier Heizgängen unterworfen. Ein Heizgang wurde folgendermaßen durchgeführt: Starttemperatur 10 °C, Aufheizen bis zur Haltetemperatur, Haltezeit 1 Minute, Hinunterkühlen auf 10 °C, Haltezeit 1 Minute, erneutes Aufheizen usw.. Dabei wurde jede Mischung für jede Haltetemperatur neu gemischt. Beim Aufheizen wurde das Schmelzpeakmaximum (SM), beim Abkühlen das Kristallisiationspeakmaximum (KM) bestimmt.
Dabei wurden die folgenden, in Tabelle 4 zusammengestellten Ergebnisse erhalten:

**Tabelle 4**

| | **185/1** | **185/2** | **185/3** | **185/4** | **(°C)** |
|---|---|---|---|---|---|
| **4a-SM** | 175,0 | 177,2 | 176,4 | 175,6 | |
| **4a-KM** | 118,1 | 118,4 | 118,7 | 118,8 | |
| **4b-SM** | 173,9 | 176,6 | 175,9 | 175,3 | |
| **4b-KM** | 118,1 | 118,1 | 118,2 | 118,4 | |
| **4c-SM** | 174,4 | 176,4 | 175,6 | 174,9 | |
| **4c-KM** | 118,0 | 118,3 | 118,5 | 118,7 | |
| **4d-SM** | 174,4 | 174,5 | 174,9 | 174,3 | |
| **4d-KM** | 116,8 | 116,8 | 116,8 | 116,8 | |
| | | | | | |

| | **190/1** | **190/2** | **190/3** | **190/4** | **(°C)** |
|---|---|---|---|---|---|
| **4a-SM** | 174,4 | 175,4 | 174,4 | 172,9 | |
| **4a-KM** | 111,3 | 110,1 | 109,2 | 106,9 | |
| **4b-SM** | 174,4 | 175,8 | 174,5 | 173,5 | |
| **4b-KM** | 113,4 | 112,0 | 119,7 | 109,7 | |
| **4c-SM** | 174,9 | 174,8 | 173,4 | 172,3 | |
| **4c-KM** | 111,5 | 109,5 | 108,0 | 106,9 | |
| **4d-SM** | 174,2 | 174,9 | 173,4 | 172,3 | |
| **4d-KM** | 111,4 | 108,9 | 106,8 | 105,1 | |
| | | | | | |

| | **195/1** | **195/2** | **195/3** | **195/4** | **(°C)** |
|---|---|---|---|---|---|
| **4a-SM** | 174,8 | 173,7 | 172,1 | 170,8 | |
| **4a-KM** | 106,8 | 104,1 | 102,8 | 101,9 | |
| **4b-SM** | 174,0 | 174,6 | 172,9 | 171,7 | |
| **4b-KM** | 111,6 | 107,5 | 104,8 | 103,7 | |
| **4c-SM** | 174,6 | 173,4 | 171,6 | 170,1 | |
| **4c-KM** | 107,0 | 103,9 | 102,3 | 101,3 | |
| **4d-SM** | 173,8 | 173,9 | 171,2 | 169,6 | |
| **4d-KM** | 105,4 | 98,1 | 89,1 | 83,1 | |

| | **200/1** | **200/2** | **200/3** | **200/4** | **(°C)** |
|---|---|---|---|---|---|
| **4a-SM** | 175,7 | 172,8 | 170,7 | 168,5 | |
| **4a-KM** | 103,6 | 100,8 | 98,1 | 96,1 | |
| **4b-SM** | 174,8 | 173,3 | 171,3 | 169,6 | |
| **4b-KM** | 102,3 | 99,2 | 99,0 | 98,5 | |
| **4c-SM** | 175,8 | 172,9 | 170,1 | 168,6 | |
| **4c-KM** | 102,0 | 99,1 | 97,6 | 95,1 | |
| **4d-SM** | 174,5 | 172,0 | 169,6 | 165,3 | |
| **4d-KM** | 97,2 | 78,7 | 64,0 | 63,4 | |
| | | | | | |

| | **205/1** | **205/2** | **205/3** | **205/4** | **(°C)** |
|---|---|---|---|---|---|
| **4a-SM** | 174,7 | 171,1 | 167,6 | 164,7 | |
| **4a-KM** | 99,5 | 94,0 | 91,0 | 88,6 | |
| **4b-SM** | 174,7 | 172,5 | 170,0 | 165,5 | |
| **4b-KM** | 100,8 | 99,0 | 98,0 | 96,4 | |
| **4c-SM** | 174,6 | 171,3 | 168,0 | 165,5 | |
| **4c-KM** | 98,4 | 94,5 | 92,5 | 89,3 | |
| **4d-SM** | 174,4 | 169,9 | 165,0 | 161,0 | |
| **4d-KM** | 64,2 | 60,6 | 60,3 | 60,4 | |
| | | | | | |

| | **210/1** | **210/2** | **210/3** | **210/4** | **(°C)** |
|---|---|---|---|---|---|
| **4a-SM** | 174,4 | 169,3 | 164,1 | 161,1 | |
| **4a-KM** | 96,6 | 90,7 | 87,1 | 86,2 | |
| **4b-SM** | 174,1 | 170,1 | 166,5 | 163,3 | |
| **4b-KM** | 97,4 | 94,1 | 93,1 | 88,9 | |
| **4c-SM** | 175,5 | 169,3 | 166,0 | 161,9 | |
| **4c-KM** | 95,1 | 90,6 | 86,6 | 86,0 | |
| **4d-SM** | 174,9 | 161,4 | 156,2 | 151,4 | |
| **4d-KM** | 63,6 | 61,3 | 60,1 | 57,2 | |

Die gemessenen Werte zeigen die gegenüber Poly-HB verbesserte Thermostabilität und die Kristallisation der Schmelze der erfindungsgemäßen Mischungen bereits bei höheren Temperaturen.

### Beispiel 4

Aus a) Poly-HB und 0,2 Gew% Bornitrid **(5a)** , b) Poly-HB, 0,2 Gew% Bornitrid und 1,2 Gew% 1,10-Decyldicarbonsäure **(5b)** und c) Poly-HB, 0,2 Gew% Bornitrid, 1,2 Gew% 1,10-Decyldicarbonsäure und 0,4 Gew% Borsäure **(5c)** wurden, wie im Beispiel 2 beschrieben, Probekörper hergestellt, deren mechanischen Eigenschaften und deren Drehmomente D getestet und gemessen und mit denen von Poly-HB verglichen wurden. Dabei wurden die folgenden, in Tabelle 5 zusammengestellten Werte ermittelt:

**Tabelle 5**

| | **5a** | **5b** | **5c** |
|---|---|---|---|
| epsilon (%) | 5,93 | 8,41 | 8,27 |
| sigma (N/mm²) | 4,95 | 5,05 | 5,09 |
| aₙ (kJ/m²) | 6,08 | 14,62 | 11,97 |
| D (Nm, 175 °C) | 6,1 | 7,6 | 9,0 |

Die gemessenen Werte zeigen die gegenüber Poly-HB verbesserten mechanischen Eigenschaften der erfindungsgemäßen Mischung und die Erhöhung der Viskosität.

### Beispiel 5

Wie im Beispiel 1 beschrieben, wurden die Mischungen a) 99,8 Gew% Poly-HB und 0,2 Gew% Bornitrid **(6a)**, b) 97,8 Gew% Poly-HB, 0,2 Gew% Bornitrid und 2 Gew% 1,10-Decandiol **(6b)** und c) 98,2 Gew% Poly-HB, 0,2 Gew% Bornitrid, 1,2 Gew% 1,10-Decandiol und 0,4 Gew% Borsäure **(6c)** hergestellt. Aus den Mischungen wurde auf die im Beispiel 2 beschriebene Art und Weise Probekörper hergestellt und deren mechanischen Eigenschaften und Drehmomente getestet. Dabei wurden die folgenden, in Tabelle 6 zusammengestellten Werte ermittelt:

**Tabelle 6**

| | **6a** | **6b** | **6c** |
|---|---|---|---|
| epsilon (%) | 5,93 | 7,59 | 8,27 |
| sigma (N/mm²) | 4,95 | 4,96 | 5,11 |
| aₙ (kJ/m²) | 6,08 | 11,77 | 15,50 |
| D (Nm, 175 °C) | 6,1 | 6,1 | 10,0 |

### Beispiel 6

Wie im Beispiel 1 beschrieben, aber unter Verwendung von Mischungen bestehend aus 93,9 Gew.% Poly-HB, 0,1 Gew.% Bornitrid und 6 Gew.% Glycerintriacetat **(7a(6%))**, aus 93,5 Gew.% Poly-HB, 0,1 Gew.% Bornitrid, 0,4 Gew.% Borsäure und 6 Gew.% Glycerintriacetat **(7(6%)**) wurden Mischungen hergestellt. Entsprechende Mischungen mit und ohne Borsäure wurden auch mit 11 Gew.% (**7a(11%)** und **7(11%)**) und 20 Gew.% **(7a(20%)** und **7(20%)**) Glycerintriacetat hergestellt. Auf die in den Beispielen 2 und 5 beschriebene Art und Weise wurden deren mechanischen Eigenschaften, deren Drehmoment und deren Schmelz- und Kristallisationstemperaturen bestimmt . Dabei wurden die in Tabelle 7 zusammengestellten Werte ermittelt:

**Tabelle 7**

| **Mischung** | **epsilon (%)** | **sigma (N/mm**^{**2**}**)** | **D (Nm)** | **T**_{**S**} **(°C)** | **T**_{**K**} **(°C)** |
|---|---|---|---|---|---|
| **7a (6%)** | 9,10 | 3,57 | 5,50 | 173,0 | 111,1 |
| **7 (6%)** | 10,21 | 3,89 | 9,80 | 173,7 | 114,8 |
| **7a (11%)** | 10,76 | 3,17 | 5,50 | 167,2 | 102,4 |
| **7 (11%)** | 11,58 | 3,42 | 8,20 | 171,8 | 108,0 |
| **7a (20%)** | 8,83 | 2,09 | 4,10 | 161,5 | 95,4 |
| **7 (20%)** | 12,83 | 2,45 | 6,70 | 165,0 | 100,3 |

Die Schlagzähigkeit aₙ erreichte bei allen Proben Werte von >392 kJ/m². Bei weiteren Schlägen mit einer Hammergröße von 40 kgcm zerbrachen die Probekörper, die keine Borsäure enthielten. Die Probekörper, die Borsäure enthielten, konnten auf diese Weise nicht zerstört werden.

Zur Herstellung der in Referenzbeispiel 1 und in den Beispielen 1 bis 2 und 4 bis 6 beschriebenen Mischungen wurde ein elektrisch beheizbarer Brabender Zweischneckenmischer W50, zwei Zonen, verwendet. Die Eintragszeit der Komponenten in den Mischer betrug etwa- 45 Sekunden. Zur Beschickung wurde ein Preßstempel verwendet. Die Zugversuche und Schlagzähigkeitsversuche wurden gemäß Bartnig et al., Prüfung hochpolymerer Werkstoffe, Grundlagen und Prüfmethoden, Carl Hanser Verlag, München Wien (1977) mit einer Instron Zugmaschine und mit einem Zwickpendelschlagwerk durchgeführt. Die Zugversuche wurden wie im Referenzbeispiel 1 beschrieben durchgeführt. Für die Schlagzähigkeitsversuche wurden Hämmer einer Schlagkraft von 5, 10 und 40 kgcm verwendet. Die zur Bestimmung der Schlagzähigkeit verwendeten Probekörper hatten eine Länge von 30mm, eine Breite von 10mm, eine Dicke von lmm und eine Querschnittfläche von 10mm.
Die DSC - Messungen wurden mit Hilfe eines Perkin - Elmer DSC 7 Kalorimeters wie im Beispiel 3 beschrieben durchgeführt. Die Grundlagen für DSC - Messungen sind z. B. in MacKenzie et al., Differential Thermal Analysis, Academic Press, Vol.1, 1970 und Vol.2, 1972 zu finden.
Das Drehmoment ist ein Maß für die Viskosität und wurde jeweils wie im Beispiel 1 beschrieben ermittelt.
Die verwendete Poly-3-D(-)-hydroxybuttersäure wurde nach der in EP-A-0 149 744 beschriebenen Verfahrensweise hergestellt. Die verwendete Borsäure (98 %) und das verwendete Bornitrid wurden von der Fa. Aldrich bezogen. Die verwendeten Polyether stammten von der Fa. Serva.

## Patentansprüche

1. Polymerisat, dadurch gekennzeichnet, daß zumindest einige Säure- und/oder Alkoholgruppen eines Polyhydroxyalkanoates über Esterbindungen mit Borsäure und gegebenenfalls mit Alkohol- und/oder Säuregruppen einer oder mehrerer Verbindungen, die mindestens zwei reaktive Gruppen wie Säure- und/oder Alkoholgruppen enthalten, verbunden sind, wobei der Polyhydroxyalkanoatanteil im Polymerisat mindestens 70 Gew.% beträgt.

2. Polymerisat nach Anspruch 1, dadurch gekennzeichnet, daß die Verbindung, die mindestens zwei reaktive Gruppen wie Säure- und/oder Alkoholgruppen enthält eine Carbonsäure mit mindestens 5 C-Atomen und mindestens zwei Säuregruppen, eine Hydroxycarbonsäure mit mindestens 5 C-Atomen, ein Diol mit mindestens 5 C-Atomen oder ein Polyol oder ein Polyether ist.

3. Polymerisat nach Anspruch 1 oder 2, dadurch gekennzeichnet, daß das Polyhydroxyalkanoat ein Homo- oder Copolymer der Poly-D(-)-3-hydroxybuttersäure ist.

4. Polymerisat nach Anspruch 3, dadurch gekennzeichnet, daß die Verbindung, die mindestens zwei reaktive Gruppen wie Säure- und/oder Alkoholgruppen enthält eine Dicarbonsäure oder ein Diol mit mindestens 8 C-Atomen ist.

5. Polymerisat nach einem der Ansprüche 1 bis 4, dadurch gekennzeichnet, daß es zusätzlich Weichmacher und/oder Nucleierungsmittel und/oder andere in der Polymerchemie übliche Zusätze enthält.

6. Verfahren zur Herstellung eines Polymerisates nach einem der Ansprüche 1 bis 5, dadurch gekennzeichnet, daß ein Polyhydroxyalkanoat mit Borsäure und gegebenenfalls mit einer Verbindung oder mit einer Mischung von Verbindungen, die mindestens zwei reaktive Gruppen wie Säure- und/oder Alkoholgruppen enthalten mit oder ohne Einbringen von Weichmachern, Nucleierungsmitteln oder anderen in der Polymerchemie üblichen Zusätzen gemischt und aufgeschmolzen wird, wobei Säure- und/oder Hydroxygruppen des Polyhydroxyalkanoate mit Borsäure und gegebenenfalls mit Alkohol- und/oder Säuregruppen der zugesetzten Verbindungen Esterbindungen ausbilden.

7. Verwendung von Mischungen, die mindestens 70 Gew.% Polyhydroxyalkanoat Borsäure und gegebenenfalls eine Verbindung oder eine Mischung von Verbindungen enthalten, die mindestens zwei reaktive Gruppen wie Säure- und/oder Alkoholgruppen enthalten, die beim Aufschmelzen Esterbindungen mit freien Hydroxy- und/oder Säuregruppen des Polyhydroxyalkanoates ausbilden können, zur Herstellung eines Polymerisates.

## Claims

1. Polymerisate, characterised in that at least some of the acid and/or alcohol groups of a polyhydroxyalkanoate are bonded via ester bonds to boric acid and optionally to alcohol and/or acid groups of one or more compounds which contain at least two reactive groups, such as acid and/or alcohol groups, the polyhydroxyalkanoate content in the polymerisate being at least 70% by weight.

2. Polymerisate according to claim 1, characterised in that the compound having at least two reactive groups, such as acid and/or alcohol groups is a carboxylic acid having at least 5 C atoms and at least two acid groups, a hydrocarboxylic acid having at least 5 C atoms, a diol having at least 5 C atoms or a polyol or polyester.

3. Polymerisate according to claim 1 or 2, characterised in that the polyhydroxyalkanoate is a homo- or copolymer of poly-D(-)-3-hydroxybutyric acid.

4. Polymerisate according to claim 3, characterised in that the compound having at least two reactive groups such as acid and/or alcohol groups is a dicarboxylic acid or diol having at least 8 C atoms.

5. Polymerisate according to any one of claims 1 to 4 characterised in that it contains additionaly plasticisers and/or nucleating agents and/or other additives which are customary in polymer chemistry.

6. Process for the preparation of a polymerisate according to any of the claims 1 to 5 characterised in that a polyhydroxyalkanoate is mixed with boric acid and optionally with a compound or a mixture of compounds having at least two reactive groups such as acid and/or alcohol groups with or without introduction of plasticisers, nucleating agents or other additives which are customary in polymer chemistry, and is melted whereby the acid and/or hydroxyl groups of the polyhydroxylkanoate forms ester bonds with the boric acid and optionally with the alcohol and/or acid groups of the compounds added.

7. Use of mixtures having at least 70% per weight of polyhydroxyalkanoate, boric acid and optionally of a compound or a mixture of compounds having at least two reactive groups such as acid and/or alcohol groups which form ester bonds with free hydroxyl and/or acid groups of the polyhydroxyalkanoate upon melting for the preparation of a polymerisate.

## Revendications

1. Polymère caractérisé par au moins quelques groupes acidiques et/ou alcooliques d'un acide polyhydroxyalcanoique qui sont estérifiés avec l'acide borique et, le cas échéant, avec des groupes alcooliques et/ou acidiques d'un ou de plusieurs composés qui contiennent au moins deux groupes réactifs tels que groupes acidiques et/ou alcooliques, la partie en acide polyhydroxyalcanoique comprenant au moins 70% en poids du polymère.

2. Polymère suivant la revendication 1 caractérisé en ce que le composé comprenant au moins deux groupes réactifs tels que groupes acidiques et/ou alcooliques constitue un acide carbonique à au moins 5 atomes C et deux groupes acidiques, un acide hydroxycarbonique à au moins 5 atomes C, un diole à au moins 5 atomes C ou un polyole ou un polyether.

3. Polymère suivant la revendication 1 ou 2 caractérisé en ce que l'acide polyhydroxyalcanoique constitue un homo- ou copolymère de l'acide poly-D(-)-3-hydroxybutyrique.

4. Polymère suivant la revendication 3 caractérisé en ce que le composé contenant au moins deux groupes réactifs tels que groupes acidiques et/ou alcooliques constitue un acide dicarbonique ou un diole à au moins 8 atomes C.

5. Polymère suivant l'une des revendications 1 à 4 caractérisé en ce qu'il contient en supplément des plastifiants et/ou des agents nucléidifiants et/ou d'autres additifs qui sont d'usage dans la chimie polymérique.

6. Procédé servant à la préparation d'un polymère suivant l'une des revendications 1 à 5 caractérisé en ce qu'un acide polyhydroxyalcanoique est mélangé et fondu avec de l'acide borique, et, le cas échéant, avec un composé ou un mélange de composés contenant au moins deux groupes réactifs tels que groupes acidiques et/ou alcooliques sans ou avec introduction de plastifiants, d'agents nucléidifiants ou d'autres additifs d'usage dans la chimie polymérique, l'acide et/ou les groupes hydroxiques de l'acide polyhydroxyalcanoique formant des liaisons estérifiées avec l'acide borique et, le cas échéant, avec les groupes alcooliques et/ou acidiques des composés additionnés.

7. L'application de mélanges contenant au moins 70% en poids d'acide polyhydroxyalcanoique, d'acide borique et, le cas échéant, un composé ou un mélange de composés contenant au moins deux groupes réactifs tels que groupes acidiques et/ou alcooliques formant, lorsqu'ils sont fondus, des liaisons estérifiées avec des groupes hydroxyliques et/ou acidiques libres de l'acide polyhydroxyalcanoique servant à la préparation d'un polymère.
